# EUROPÄISCHE PATENTSCHRIFT

(11) **EP 3 514 434 B1**
(45) Veröffentlichungstag und Bekanntmachung des Hinweises auf die Patenterteilung: **03.04.2024**
(21) Anmeldenummer: 18152434.9
(22) Anmeldetag: 19.01.2018
(51) Int. Cl.: F16L 41/06, F16L 41/12, F16L 47/30, F16L 47/34

(54) **ROHRSCHELLE**
PIPE CLAMP
COLLIER DE SERRAGE DE TUYAU

(43) Veröffentlichungstag der Anmeldung: 24.07.2019
(73) Patentinhaber: Georg Fischer Wavin AG, 8201 Schaffhausen (CH)
(72) Erfinder: Trefz, Oliver, 79848 Bonndorf (DE); Hüssy, Jonas, 8213 Neunkirch (CH); Petry, Dirk, 8245 Feuerthalen (CH)
(74) Vertreter: Fenner, Seraina

(56) Entgegenhaltungen:
- WO-A1-2016/023540
- US-A- 793 049
- US-A- 5 598 995
- US-A1- 2012 291 232

## Beschreibung

Die Erfindung betrifft eine Rohrschelle insbesondere Rohranbohrschelle für ein Medium förderndes Hauptrohr, vorzugsweise aus Kunststoff, beinhaltend ein Sattelstück, Lagerelemente, wobei die Lagerelemente am Sattelstück angeordnet sind und vorzugsweise einteilig mit dem Sattelstück ausgebildet sind, eine Spanneinheit, wobei die Spanneinheit mindestens ein Band zur Umschlingung des Hauptrohres, eine Bandanbindung und einen Spannhebel beinhaltet, wobei die Bandanbindung und der Spannhebel jeweils an einem Ende des Bandes bzw. der Bänder angeordnet sind und sich gegenüberliegen.

Solche Rohrschellen dienen meist dem Anschliessen abgehender Leitungen von Hauptleitungen und werden in der Regel am Hauptrohr festgespannt, sei es für Rohrschellen, die anschliessend verschweisst oder auch Rohrschellen, die nur am Hauptrohr festgespannt sind.

Die WO 2016/023540 A1 zeigt eine Anbohrarmatur die mittels eines Spannbands am Hauptrohr befestigt ist. Am Spannhebel bzw. an der Spannvorrichtung des Spannhebels in dem das Spannband gelagert ist, befindet sich aussen eine Gleitkontur, die es ermöglicht das Spannband zu spannen indem durch das Verdrehen des Spannhebels bzw. der Gleitkontur ein weiter von der Drehachse des Bandendes beabstandeter Bereich der Gleitkontur zwischen Lagerschale und Spannband aufritt und somit Lagerschale und Spannband weiter voneinander beabstandet.

Nachteilig hierbei ist, dass der Spannweg dadurch sehr kurz ausfällt und die Längenveränderung vom losen Spannband bzw. dem schmalen Bereich der Gleitkontur bis zum festgezogenen Spannband bzw. dem breiten bzw. weiter beabstandeten Bereich der Gleitkontur gering ist, wodurch eine Befestigung der Anbohrarmatur am Hauptrohr eher schwierig ist, da das Einhängen des Spannhebels aufgrund der relativ genauen Bandlänge, die keine grosse Rohrtoleranz zulässt, in die Lagerschale eher schwierig ist.

Die DE 44 37 410 A1 offenbart eine Abdichtungsvorrichtung zum Abdichten eines Rohrlecks bei der eine Kompresse mit Hilfe einer Schnellspannvorrichtung an einem abzudichtenden Leck festgelegt wird. Die Vorrichtung weist einen langen Spannweg auf wodurch diese Abdichtvorrichtung auf Rohren unterschiedlicher Durchmesser eingesetzt werden kann. Damit eine solche Vorrichtung befestigt werden kann bedingt es jedoch hohe Kräfte zum Umlegen des Spannhebels. Mittels einer zusätzlichen Zugfeder wird dem entgegengewirkt, wobei dies den Nachteil hat, dass durch die zusätzlich benötigte Zugfeder die Vorrichtung mehrere Teile enthält und dadurch wiederum aufwendiger in der Herstellung und im Zusammenbau ist.

Es ist Aufgabe der Erfindung eine Rohrschelle sowie deren Spanneinheit und ein damit verbundenes Herstellverfahren vorzuschlagen, dass eine wirtschaftliche Herstellung erlaubt sowie eine Rohrschelle, die genügend Spannweg aufnimmt um den Rohrdurchmessertoleranzen gerecht zu werden aber dennoch leicht festspannbar und leicht montierbar ist.

Diese Aufgabe wird erfindungsgemäss durch die Merkmale des Anspruchs 1 gelöst.

Die erfindungsgemässe Rohrschelle insbesondere Rohranbohrschelle für ein Medium förderndes Hauptrohr ist vorzugsweise aus Kunststoff hergestellt. Die Rohrschelle beinhaltet ein Sattelstück mit daran angeordneten Lagerelementen. Die Lagerelemente dienen der Lagerung der Spanneinheit, wobei die Lagerelemente am Sattelstück angeordnet sind und das Sattelstück mit den Lagerelementen als ein Teil ausgebildet bzw. einteilig ist.

Vorzugsweise weist das Sattelstück an der Auflageinnenseite eine Heizdrahtwicklung auf um am Hauptrohr festgeschweisst zu werden.

Zudem beinhaltet die Rohrschelle eine Spanneinheit, wobei die Spanneinheit mindestens ein Band zur Umschlingung des Hauptrohres, eine Bandanbindung und einen Spannhebel aufweist. Die Bandanbindung und der Spannhebel sind jeweils an den Bandenden angeordnet und liegen sich gegenüber. Das bzw. die Bänder sind an dem Spannhebel derart befestigt, dass beim Umlegen des Spannhebels von der Montagepositon bzw. der nicht gespannten Position in die Endlage des Spannhebels sich der Abstand zwischen der Bandbefestigung am Spannhebel und der Bandanbindung auf der gegenüberliegenden Seite deutlich vergrössert, dadurch kann die Rohrschelle auch an Hauptrohren befestigt werden die einem grossen Toleranzbereich in Bezug auf den Aussendurchmesser unterliegen. Um die Spanneinheit zu verspannen benötigt es aufgrund des grossen Spannwegs ein hohes Drehmoment um den Spannhebel umzulegen. Damit dies auch durch einen kleinen Kraftaufwand ermöglicht wird, ist eine Verlängerung am Spannhebel angeordnet. Die Verlängerung wird nach dem Spannvorgang wieder vom Spannhebel entfernt und kann bei weiteren Rohrschellen eingesetzt werden. Die Verlängerung ist dadurch mehrfach einsetzbar. Durch die Verlängerung wird der Abstand zwischen der Drehachse des Spannhebels und dem Punkt wo die Kraft zum Umlegen des Hebels eingeleitet wird vergrössert, wodurch bei gleichem Drehmoment das benötigt wird, eine geringere Kraft erforderlich ist.

Die Kraft wird zudem noch über das E-Modul des bzw. der Bänder definiert die vorzugsweise aus Kunststoff hergestellt sind, sowie deren Geometrie auch einen Einfluss auf die erforderliche Kraft hat.

Es hat sich als vorteilhaft gezeigt, wenn als Verlängerung ein herkömmlicher 6kt-Schlüssel bzw. Steckschlüssel eingesetzt wird, da dieser meist bei solchen Montagen bereits vorliegt.

Vorzugsweise ist die Verlängerung durch einschrauben oder einstecken am Spannhebel befestigt, dies ermöglicht ein einfaches und rasches Befestigen und die Verlängerung ist an weiteren Rohrschellen bzw. Spannhebel einsetzbar. Um dies zu ermöglichen weist die Verlängerung vorzugsweise ein Gewinde oder einen Mehrkant auf der von der Aufnahme im Spannhebel aufgenommen wird. Das hohe Drehmoment das zum Festspannen der Spanneinheit benötigt wird, kommt aufgrund des langen Spannwegs zustande, das heisst, im gelösten Zustand ist das oder die Bänder derart lose, dass auch Hauptrohre problemlos umschlungen werden können, die in der oberen Rohrtoleranz liegen. Durch den Spannhebel bzw. die Bandbefestigung am Spannhebel und die Drehachse, welche durch die Lagerung des Spannhebels gebildet wird, wird eine Distanz dazwischen vorgegeben, die einen solch grossen Spannweg ergibt und dementsprechend ein hohes Drehmoment benötigt, das aber wiederum mit Hilfe der Verlängerung, welche einen langen Abstand zwischen der Drehachse und Stelle der Krafteinleitung bildet, die die benötigte Kraft reduziert.

Erfindungsgemäß sind die am Sattelstück angeordneten Lagerelemente auf der einen Seite als Lagerbolzen und auf der gegenüberliegenden Seite als Lagerschale ausgebildet.

Dadurch wird ermöglicht, dass die Bandanbindung auf der einen Seite des Sattelstücks in die Lagerschalen eingelegt ist und auf der anderen Seite greifen die Klammern des Spannhebels um die Lagerbolzen, um welche der Spannhebel geschwenkt wird und diese dadurch gleich als Drehachse dienen.

Erfindungsgemäß weist der Spannhebel Klammern zum Umgreifen der Lagerbolzen auf.

Durch diese Ausgestaltung des Spannhebels ist auch das Anordnen des Spannhebels am Sattelstück bzw. an den Lagerbolzen einfach umzusetzen.

Vorzugsweise umschlingen die Klammern den Lagerbolzen in einem Umschlingungswinkel grösser als 180°.

Vorzugsweise weist die Spanneinheit ein bis vier Bänder auf, welche das Hauptrohr umschlingen, speziell bevorzugt sind zwei Bänder an der Spanneinheit angeordnet. Die Bänder verlaufen parallel zueinander und gehen an den Enden in den Spannhebel und auf der anderen Seite in die Bandanbindung über, wobei die Bandanbindung vorzugsweise als Achse ausgebildet ist, wobei die Achse vorzugsweise zylinderförmig ausgebildet ist.

Eine mögliche Ausgestaltung der Erfindung liegt darin, dass das eine Ende des Bands bzw. die einen Enden der Bänder an der Bandbefestigung des Spannhebels angeordnet sind, wobei die Bandbefestigung distanziert von den Klammern, welche die Lagerelemente bzw. Lagerbolzen am Sattelstück umgreifen und als Drehachse dienen, angeordnet sind. Durch die Distanz zwischen Bandbefestigung am Spannhebel und der Drehachse, welche durch die Klammern am Lagerbolzen gebildet wird, wird die Hebelwirkung definiert. Das Bandende bzw. die Bandenden sind durch Umspritzen mittels Kunststoff, welcher den Spannhebel bildet, mit dem Spannhebel verbunden bzw. einteilig ausgebildet. Alternativ können die Bänder auch an den Spannhebel und die Bandanbindung verschraubt, vernietet oder geklemmt sein. An den gegenüberliegenden Bandenden ist dementsprechend die Bandanbindung angeordnet, welche ebenfalls durch Umspritzen mittels Kunststoff oder einem der oben genannten Befestigungsalternativen gebildet ist. Durch das Umspritzen der Bandenden mittels Kunststoff zur Ausgestaltung eines Spannhebels und einer Bandanbindung, die vorzugsweise als Achse ausgebildet ist, ist die Spanneinheit einteilig ausgebildet.

Als weitere mögliche Ausgestaltung kann die komplette Spanneinheit als einteiliges Spritzgussteil ausgebildet sein indem das Band bzw. die Bänder auch gespritz werden.

Vorteilhaft ist es, dass die Befestigung des Bandes bzw. der Bänder am Spannhebel von den Klammern bzw. der Drehachse eine Distanz von mindestens 15 mm aufweist.

Vorzugsweise ist am Spannhebel eine Aufnahme angeordnet, wobei die Aufnahme zur Aufnahme der Verlängerung dient. Die Aufnahme ist vorzugsweise zylinderförmig ausgestaltet. Sie dient bei gespanntem Spannband ebenfalls gleich als Anschlag damit der Spannhebel nur bis zu einer bestimmten Position umgelegt werden kann, die als Endlage definiert ist. Würde der Spannhebel über diese Stellung hinaus weiter geschwenkt werden, würde sich die Bandspannung wiederum reduzieren, was nicht erwünscht wäre. Durch die Aufnahme kann die Verlängerung einfach am Spannhebel befestigt werden und nach dem Spannvorgang wieder entfernt werden und bei einer weiteren Rohrschelle eingesetzt werden. Vorzugsweise ist die Vertiefung bzw. die Öffnung in der Aufnahme zur Aufnahme der Verlängerung formschlüssig ausgebildet. Speziell bevorzugt ist sie als Mehrkant oder Gewinde ausgebildet damit eine verdrehsichere Aufnahme gewährleistet ist, wobei auch eine kreisförmige Querschnittsfläche denkbar ist.

Als vorteilhaft hat sich gezeigt, wenn die Bandanbindung als Achse ausgebildet ist und in den auf der einen Seite des Sattelstücks angeordneten Lagerschalen angeordnet ist. Vorzugsweise weisen die Lagerschalen axiale Anschläge auf. Dies gewährleistet beim Spannen der Spanneinheit eine optimale Ausrichtung der Bänder am Aussendurchmesser des Hauptrohres.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässen Rohrschelle mit der daran angeordneten Verlängerung,
- Fig. 2: eine dreidimensionale Ansicht der erfindungsgemässen Rohrschelle von der Seite der Bandanbindung gesehen,

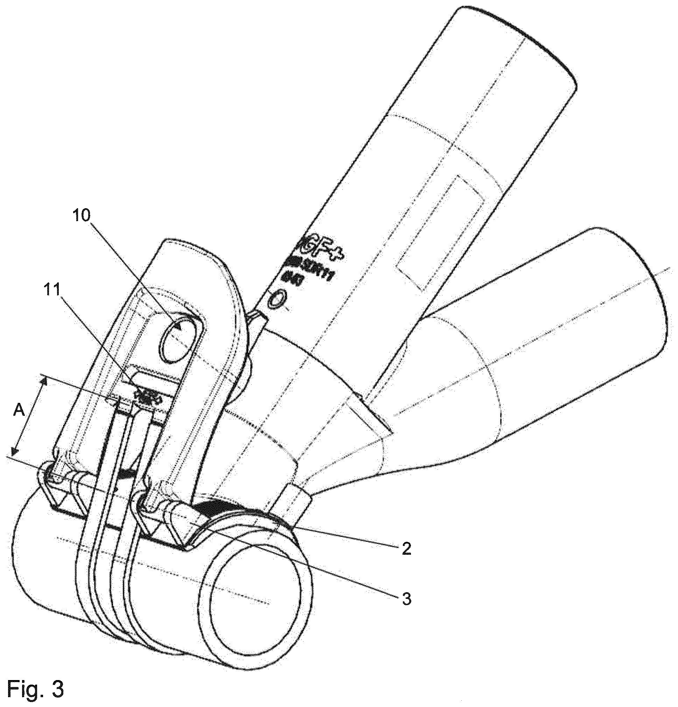

- Fig. 3: eine dreidimensionale Ansicht einer erfindungsgemässen Rohrschelle in gespanntem Zustand, wobei die Verlängerung bereits entfernt wurde,
- Fig. 4: eine Seitenansicht einer erfindungsgemässen Rohrschelle in gespanntem Zustand und
- Fig. 5: eine Seitenansicht einer erfindungsgemässen Rohrschelle in nicht gespanntem Zustand.

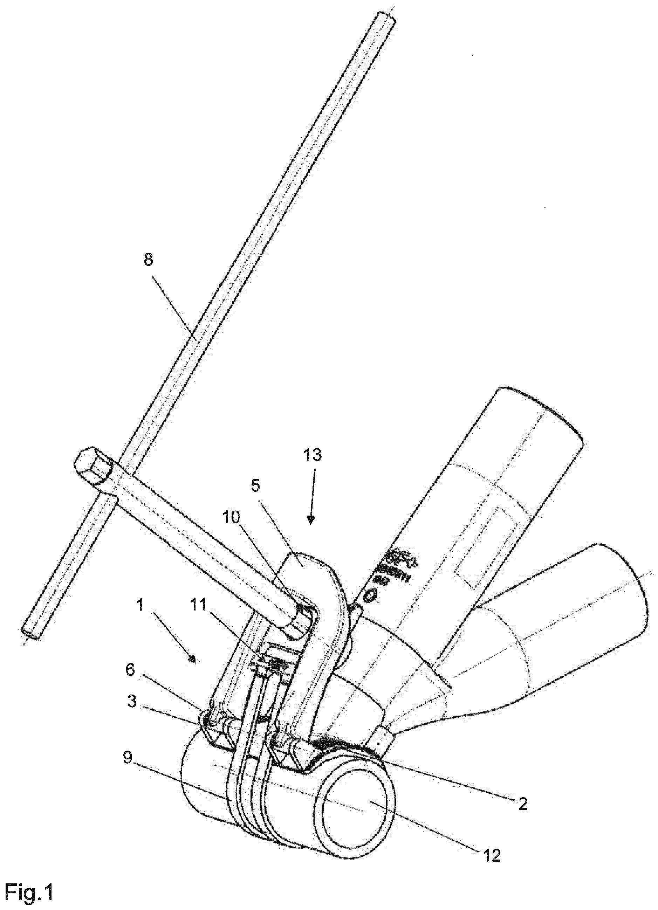

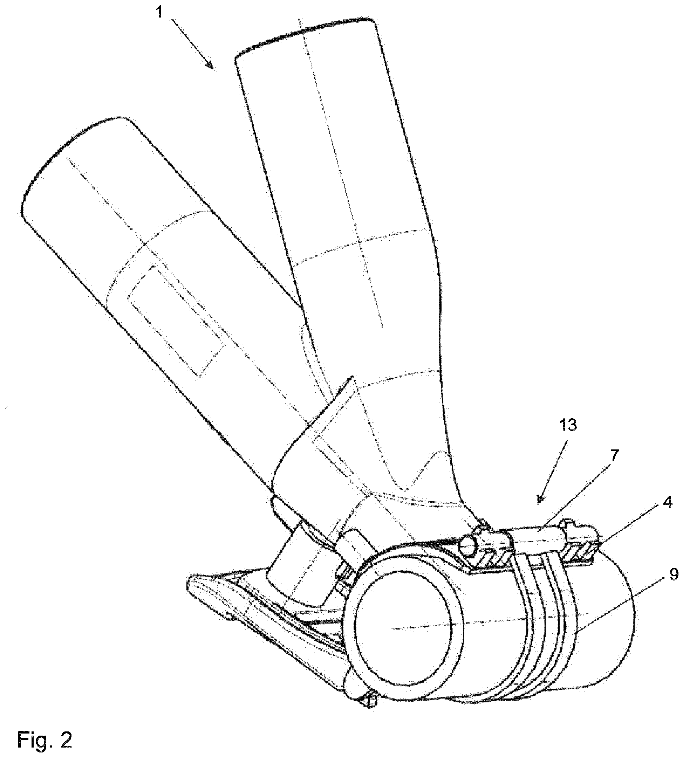

Die in Fig. 1 dargestellte Zeichnung zeigt eine dreidimensionale Abbildung einer erfindungsgemässen Rohrschelle 1 mit der Verlängerung 8 zum Festspannen der Spanneinheit 13. Die Rohrschelle 1 ist auf einem Hauptrohr 12 befestigt und mittels Spanneinheit 13 fixiert. Das Sattelstück 2 ist mit den daran angeordneten Lagerelementen 3, 4 vorzugsweise einteilig ausgebildet. Die Lagerelemente 3, 4 weisen auf der einen Seite des Sattelstücks 2 die Form einer Lagerschale 4, sichtbar in Fig. 2 und auf der anderen Seite die Form eines Lagerbolzens 3 auf.

Selbstverständlich wären auch andere Ausführungsformen für ein Lagerelement bzw. einer Lagerung denkbar.

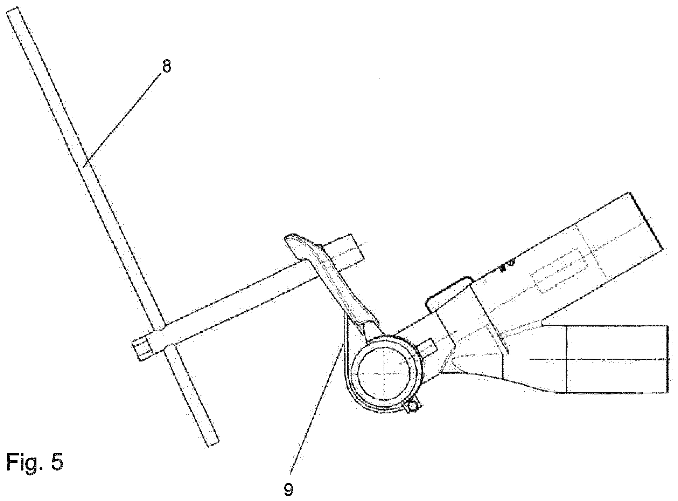

Die Spanneinheit 13 beinhaltet mindestens ein Band 9, wobei in der abgebildeten Ausführungsform zwei Bänder 9 angeordnet sind die parallel zueinander verlaufen. An den Enden der Bänder 9 sind der Spannhebel 5 und gegenüberliegend die Bandanbindung 7 angeordnet. Die Spanneinheit 13 ist als ein Teil ausgebildet, da die Bandenden mittels des Kunststoffs des Spannhebels 5 und der Bandanbindung 7 umspritzt sind. Die Bandenden gehen an der Bandbefestigung 11 in den Spannhebel 5 über und die gegenüberliegenden Bandenden gehen in die Bandanbindung 7 über. Die Klammern 6 des Spannhebels 5 dienen der Lagerung des Spannhebels 5 an den Lagerelementen 3, bzw. an den Lagerbolzen 3. Die Distanz A zwischen den Lagerbolzen 3 bzw. der Drehachse 3 und der Bandbefestigung 11 am Spannhebel 5 ist relativ gross ausgestaltet um einen grossen Spannweg zu haben bzw. um auch das Umschlingen von Rohrdurchmessern zu ermöglichen, die an der oberen Grenze der Norm liegen. Dies ermöglicht ein einfaches Einhängen der Bandanbindung 7, welche vorzugsweise als Achse ausgebildet ist, da die Bänder 9 entsprechend lang ausgestaltet sind, gut ersichtlich in Fig. 5 in der das Band 9 lose dargestellt ist. Selbstverständlich kann der Spannhebel 5 noch weiter nach unten geklappt werden um das Umschlingen des Hauptrohres 12 mittels der Bänder 9 während der Befestigung der Rohrschelle 1 möglichst einfach ausführen zu können. Jedoch bedingt diese grosse Distanz A, die einen solchen langen Spannweg ergibt, ein hohes Drehmoment zum Umlegen des Spannhebels 5, bzw. bis der Spannhebel 5 über den Totpunkt gekippt ist, wie er in Fig. 5 dargestellt ist. Um hier die benötigte Kraft zu reduzieren ist eine Verlängerung 8 am Spannhebel 5 angeordnet, wodurch der Abstand zur Drehachse 3 vergrössert wird und das eine Reduktion der Kraft erlaubt ohne Einfluss auf das Drehmoment. Die Verlängerung 8 ist als separates Teil ausgestaltet und kann nach dem Spannvorgang vom Spannhebel 5 entfernt werden und bei der Installation der nächsten Rohrschelle 1 wieder eingesetzt werden.

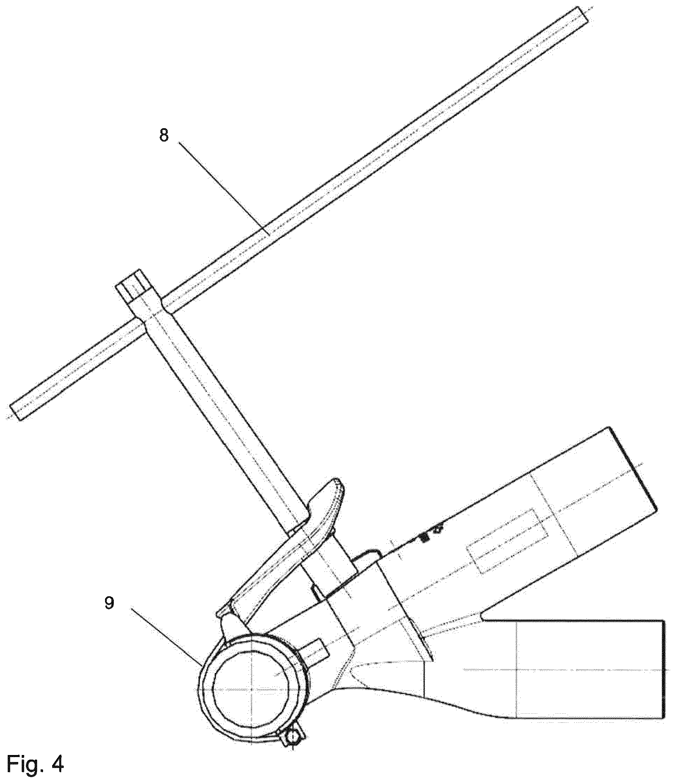

Die Verlängerung 8 ist vorzugsweise in der Aufnahme 10 am Spannhebel 5 angeordnet, die vorzugsweise formschlüssig zusammenwirken. Die Aufnahme 10 ist vorzugsweise als Hohlzylinder ausgestaltet und die Länge ist so definiert, dass sie dem Spannhebel 5 als Begrenzung dient. Das heisst, der Spannhebel 5 kann nur bis zu einer bestimmten Position umgelegt werden bis die Aufnahme 10 an der Rohrschelle 1 ansteht, wie in Fig. 4 gut ersichtlich. Dies vermeidet, dass der Spannhebel 5 über diese Stellung der Endposition hinaus geschwenkt werden kann, und sich die Spannung der Bänder so nicht wieder reduzieren kann.

### Bezugszeichenliste

- 1: Rohrschelle
- 2: Sattelstück
- 3: Lagerelement, Lagerbolzen, Drehachse
- 4: Lagerelement, Lagerschale
- 5: Spannhebel
- 6: Klammer
- 7: Bandanbindung, Achse
- 8: Verlängerung
- 9: Band, Bänder
- 10: Aufnahme
- 11: Bandbefestigung am Spannhebel
- 12: Hauptrohr
- 13: Spanneinheit

- A: Distanz

## Patentansprüche

1. Rohrschelle (1) insbesondere Rohranbohrschelle für ein Medium förderndes Hauptrohr (12), vorzugsweise aus Kunststoff, beinhaltend ein Sattelstück (2), Lagerelemente (3, 4), wobei die Lagerelemente (3, 4) am Sattelstück (2) angeordnet sind und vorzugsweise einteilig mit dem Sattelstück (2) ausgebildet sind, eine Spanneinheit (13), wobei die Spanneinheit (13) mindestens ein Band (9) zur Umschlingung des Hauptrohres (12), eine Bandanbindung (7) und einen Spannhebel (5) beinhaltet, wobei die Bandanbindung (7) und der Spannhebel (5) jeweils an einem Ende des Bandes (9) bzw. der Bänder (9) angeordnet sind und sich gegenüberliegen, wobei eine Verlängerung (8) am Spannhebel (5) angeordnet ist, wobei die Verlängerung (8) vorzugsweise als separates Teil ausgebildet ist, wobei die Verlängerung (8) nach dem Festspannen der Spanneinheit (13) am Hauptrohr (12) vom Spannhebel (5) entfernbar ist, wobei die am Sattelstück (2) angeordneten Lagerelemente (3, 4) auf der einen Seite als Lagerbolzen (3) und auf der gegenüberliegenden Seite als Lagerschale (4) ausgebildet sind, **dadurch gekennzeichnet, dass** der Spannhebel (5) Klammern (6) zum Umgreifen der Lagerbolzen (3) aufweist.

2. Rohrschelle (1) nach Anspruch 1, **dadurch gekennzeichnet, dass** die Verlängerung (8) durch einschrauben oder einstecken am Spannhebel (5) befestigt ist.

3. Rohrschellen (1) nach Anspruch 1, **dadurch gekennzeichnet, dass** die Klammern (6) das Lagerelement (3) vorzugsweise den Lagerbolzen (3) mehr als 180°umschlingen.

4. Rohrschelle (1) nach einem der Ansprüche 1 bis 3, **dadurch gekennzeichnet, dass** ein bis vier Bänder (9) an der Spanneinheit (13) angeordnet sind die das Hauptrohr (12) umschlingen, vorzugsweise zwei Bänder (9).

5. Rohrschelle (1) nach einem der Ansprüche 1 bis 4, **dadurch gekennzeichnet, dass** das eine Ende des Bandes (9) bzw. die einen Enden der Bänder (9) an der Bandbefestigung (11) des Spannhebels (5) angeordnet sind, wobei die Bandbefestigung (11) distanziert von den Klammern (6) welche die Lagerelemente (3, 4) bzw. Lagerbolzen (3) am Sattelstück (2) umgreifen und als Drehachse (3) dienen, angeordnet sind.

6. Rohrschelle (1) nach einem der Ansprüche 1 bis 5, **dadurch gekennzeichnet, dass** die Bandbefestigung (11) am Spannhebel (5) von den Klammern (6) bzw. der Drehachse (3) eine Distanz (A) von mindestens 15 mm aufweist.

7. Rohrschelle (1) nach einem der Ansprüche 1 bis 6, **dadurch gekennzeichnet, dass** am Spannhebel (5) eine Aufnahme (10) angeordnet ist, wobei die Aufnahme (10) zur Aufnahme der Verlängerung (8) dient.

8. Rohrschelle (1) nach einem der Ansprüche 1 bis 7, **dadurch gekennzeichnet, dass** die Bandanbindung (11) als Achse ausgebildet ist und in den auf der einen Seite des Sattelstücks (2) angeordneten Lagerschalen (4) angeordnet ist.

9. Rohrschelle (1) nach einem der Ansprüche 1 bis 8, **dadurch gekennzeichnet, dass** die Spanneinheit (13) einteilig ausgebildet ist, wobei die Bandanbindung (7) und der Spannhebel (5) durch umspritzen an den Bandenden angeordnet ist oder die komplette Spanneinheit als Spritzgussteil ausgebildet ist inklusiv dem Band bzw. den Bändern (9).

10. Rohrschelle (1) nach einem der Ansprüche 1 bis 10, **dadurch gekennzeichnet, dass** das bzw. die Bänder (9) der Spanneinheit (13) an der Bandanbindung (7) und am Spannhebel (5) demontierbar befestigt sind, vorzugsweise sind die Bandeneden an der Bandanbindung (7) und dem Spannhebel (5) verschraubt, vernietet und/oder verklemmt angeordnet.

## Claims

1. Pipe clamp (1), in particular pipe saddle clamp for a main pipe (12) conveying a medium and preferably of plastic, comprising a saddle member (2), bearing elements (3, 4), wherein the bearing elements (3, 4) are arranged on the saddle member (2) and are preferably formed in one piece with the saddle member (2), a tension unit (13), wherein the tension unit (13) comprises at least one band (9) for encircling the main pipe (12), a band linkage (7) and a clamping lever (5), wherein the band linkage (7) and the clamping lever (5) are each arranged at one end of the band (9) or bands (9) and are opposite one another, wherein an extension (8) is arranged on the clamping lever (5), wherein the extension (8) is preferably formed as a separate part, wherein after the tension unit (13) is firmly clamped on the main pipe (12) the extension (8) can be removed from the clamping lever (5), wherein the bearing elements (3, 4) arranged on the saddle member (2) are formed on one side as bearing bolts (3) and on the opposite side as bearing shells (4), **characterized in that** the clamping lever (5) comprises brackets (6) for engaging round the bearing bolts (3).

2. Pipe clamp (1) according to Claim 1, **characterized in that** the extension (8) is fastened on the clamping lever (5) by screw-in or push-fit action.

3. Pipe clamps (1) according to Claim 1, **characterized in that** the brackets (6) encircle the bearing element (3), preferably the bearing bolt (3), over more than 180°.

4. Pipe clamp (1) according to one of Claims 1 to 3, **characterized in that** one to four bands (9), preferably two bands (9), are arranged on the tension unit (13) and encircle the main pipe (12).

5. Pipe clamp (1) according to one of Claims 1 to 4, **characterized in that** the one end of the band (9) or the one ends of the bands (9), is/are arranged on the band fastening (11) of the clamping lever (5), wherein the band fastening (11) is arranged at a distance from the brackets (6) which engage round the bearing elements (3, 4) or bearing bolts (3) on the saddle member (2) and serve as the axis of rotation (3).

6. Pipe clamp (1) according to one of Claims 1 to 5, **characterized in that** the band fastening (11) on the clamping lever (5) has a distance (A) of at least 15 mm from the brackets (6) or axis of rotation (3).

7. Pipe clamp (1) according to one of Claims 1 to 6, **characterized in that** a mounting (10) is arranged on the clamping lever (5), wherein the mounting (10) serves to mount the extension (8).

8. Pipe clamp (1) according to one of Claims 1 to 7, **characterized in that** the band linkage (11) is formed as an axle and is arranged in the bearing shells (4) which are arranged on the one side of the saddle member (2).

9. Pipe clamp (1) according to one of Claims 1 to 8, **characterized in that** the tension unit (13) is formed in one piece wherein the band linkage (7) and the clamping lever (5) are arranged by injection moulding at the band ends or the complete tension unit is formed as an injection moulded part inclusive of the band or bands (9).

10. Pipe clamp (1) according to one of Claims 1 to 9, **characterized in that** the band or bands (9) of the tension unit (13) are fastened in a demountable manner on the band linkage (7) and on the clamping lever (5), and preferably the band ends are screwed, rivetted and/or clamped on the band linkage (7) and the clamping lever (5).

## Revendications

1. Bride de tube (1), en particulier bride de perçage de tube destinée à un tube principal de transport de milieu (12), de préférence en matière synthétique, ladite bride de tube contenant une pièce de réception (2), des éléments de support (3, 4), les éléments de support (3, 4) étant disposés sur la pièce de réception (2) et étant de préférence formés d'une seule pièce avec la pièce de réception (2), une unité de serrage (13), l'unité de serrage (13) contenant au moins une bande (9) destinée à entourer le tube principal (12), un raccord de bande (7) et un levier de serrage (5), le raccord de bande (7) et le levier de serrage (5) étant disposés chacun à une extrémité de la bande (9) ou des bandes (9) et se faisant face, une extension (8) étant disposée sur le levier de serrage (5), l'extension (8) étant conçue de préférence comme une partie séparée, l'extension (8) pouvant être retirée du levier de serrage (5) après que l'unité de serrage (13) a été serrée sur le tube principal (12), les éléments de support (3, 4) disposés sur la pièce de réception (2) étant conçus d'un côté comme des tourillons (3) et du côté opposé comme des coquilles de support (4), **caractérisée en ce que** le levier de serrage (5) comporte des attaches (6) destinées à s'engager autour des tourillons (3).

2. Bride de tube (1) selon la revendication 1, **caractérisée en ce que** l'extension (8) est fixée au levier de serrage (5) par vissage ou insertion.

3. Bride de tube (1) selon la revendication 1, **caractérisée en ce que** les attaches (6) s'enroulent autour de l'élément de support (3), de préférence autour du tourillon (3), sur plus de 180°.

4. Bride de tube (1) selon l'une des revendications 1 à 3, **caractérisée en ce qu'**une à quatre bandes (9), de préférence deux bandes (9), sont disposées sur l'unité de serrage (13) et s'enroulent autour du tube principal (12).

5. Bride de tube (1) selon l'une des revendications 1 à 4, **caractérisée en ce qu'**une extrémité de la bande (9) ou les extrémités des bandes (9) sont disposées sur la fixation de bande (11) du levier de serrage (5), la fixation de bande (11) étant disposée à distance des attaches (6) qui s'engagent autour des éléments de support (3, 4) ou des tourillons (3) sur la pièce de réception (2) et qui servent d'axe de rotation (3).

6. Bride de tube (1) selon l'une des revendications 1 à 5, **caractérisée en ce que** la fixation de bande (11) sur le levier de serrage (5) présente une distance (A) d'au moins 15 mm par rapport aux attaches (6) ou à l'axe de rotation (3).

7. Bride de tube (1) selon l'une des revendications 1 à 6, **caractérisée en ce qu'**un logement (10) est disposé sur le levier de serrage (5), le logement (10) servant à loger l'extension (8).

8. Bride de tube (1) selon l'une des revendications 1 à 7, **caractérisée en ce que** le raccord de bande (11) est conçu sous la forme d'un axe et est disposé dans les coquilles de support (4) disposées d'un côté de la pièce de réception (2).

9. Bride de tube (1) selon l'une des revendications 1 à 8, **caractérisée en ce que** l'unité de serrage (13) est conçue d'une seule pièce, le raccord de bande (7) et le levier de serrage (5) étant disposés par moulage par injection sur les extrémités de bande ou l'unité de serrage complète étant conçue comme une pièce moulée par injection comprenant la bande ou les bandes (9).

10. Bride de tube (1) selon l'une des revendications 1 à 9, **caractérisée en ce que** la bande ou les bandes (9) de l'unité de serrage (13) sont fixées au raccord de bande (7) et au levier de serrage (5) de manière démontable, de préférence les extrémités de bande sont vissées, rivetées et/ou serrées sur le raccord de bande (7) et le levier de serrage (5).
